Europäisches Patentamt

European Patent Office

Office européen des brevets

(11) Veröffentlichungsnummer: **0 317 751**
**A2**

## (12) EUROPÄISCHE PATENTANMELDUNG

(21) Anmeldenummer: 88116939.5

(51) Int. Cl.⁴: **B26D 7/10**

(22) Anmeldetag: **12.10.88**

(30) Priorität: **25.11.87 DE 8715637 U**

(43) Veröffentlichungstag der Anmeldung:
**31.05.89 Patentblatt 89/22**

(84) Benannte Vertragsstaaten:
**AT BE CH DE ES FR GB GR IT LI LU NL SE**

(71) Anmelder: **ETS ELEKTRO-THERMISCHE
SCHNEIDWERKZEUG GMBH
Dorfstrasse 14
D-8050 Freising-Attaching(DE)**

(72) Erfinder: **Wenger, Helmut
Eichenstrasse 4
D-8051 Kranzberg(DE)**

(74) Vertreter: **Patentanwälte Deufel- Schön-
Hertel- Lewald- Otto
Isartorplatz 6
D-8000 München 2(DE)**

(54) **Elektrisch beheiztes Schneidgerät.**

(57) Das U- oder V-förmige Messer für ein elektrisch beheiztes Schneidgerät zum Schneiden von Gummi und Kunststoffen, dessen freie Schenkel mit den Polen einer Stromquelle verbunden sind, weist einen längeren und einen kürzeren Schenkel (48, 46) auf, so daß das Einsetzen in Schlitze (40, 42) von Messeraufnahmen (32, 34) einfach und ohne Verletzungsgefahr erfolgen kann.

EP 0 317 751 A2

FIG.2

## Elektrisch beheiztes Schneidgerät

Die Erfindung betrifft ein elektrisch beheiztes schneidgerät zum Schneiden von Gummi und Kunststoffen, mit einem V- oder U-förmigen stromdurchflossenen Messer, dessen freie Schenkel mit den Polen einer Stromquelle verbunden sind.

Ein derartiges Schneidgerät ist beispielsweise geeignet zum Nachschneiden von Profilen in Lkw-Reifen. Dazu wird ein Messer, dessen Form etwa dem Querschnitt von zu schneidenden Rillen oder Nuten entspricht, in Messeraufnahmen an dem Schneidkopf des Schneidgerätes befestigt. Nach dem Einstecken der Schenkelenden des Schneidmessers werden Schrauben angezogen, so daß jeder Schenkel mit einem Pol des Schneidkopfes fest verbunden ist. Durch Einschalten eines Versorgungsstromes wird das Messer aufgeheizt.

Die Manipulation der Befestigung des Messers an dem Schneidgerät ist zeitaufwendig und darüber hinaus mit Verletzungsgefahr für die Hände des Benutzers verbunden, da es schwierig ist, die Schenkelenden des Schneidmessers gleichzeitig in den dafür vorgesehenen dünnen Aufnahmeschlitzen an dem Schneidkopf einzusetzen.

Der Erfindung liegt die Aufgabe zugrunde, ein elektrisch beheiztes Schneidgerät derart auszubilden, daß das Einsetzen des Schneidmessers schnell und ohne Verletzungsgefahr erfolgen kann.

Diese Aufgabe wird erfindungsgemäß dadurch gelöst, daß der eine Schenkel des Messers kürzer ausgebildet ist als der andere Schenkel.

Wenn das Messer erfindungsgemäß einen kürzeren und einen längeren Schenkel aufweist, kann der längere Schenkel in den zugehörigen Aufnahmeschlitz eingesetzt werden, ohne daß gleichzeitig dem kürzeren Schenkel Beachtung geschenkt werden muß. Das Einstecken eines Schenkels des Messers kann leichter überwacht und durchgeführt werden. Nachdem der längere Schenkel mit seinem Ende in dem Messeraufnahmeschlitz des Schneidkopfes eingeführt ist, kann der kürzere Schenkel mit seinem Ende eingeführt werden, ohne daß dann wieder der andere Schenkel des Schneidmessers beobachtet werden muß. Dadurch geht das Einführen der Schenkelenden in den Schneidkopf schnell, unproblematisch und ohne Verletzungsgefahr vonstatten.

Gemäß einer bevorzugten Ausführungsform beträgt der Längenunterschied der Schenkel ca. 3 mm. Diese Längendifferenz von 3 mm ist ausreichend, damit der längere Schenkel vorab in seinen Aufnahmeschlitz eingesetzt werden kann und einen ausreichenden Halt in dem Messeraufnahmeschlitz hat, wenn das Ende des kürzeren Schenkels in dem zugehörigen Messeraufnahmeschlitz eingeführt wird.

Gemäß bevorzugten Ausführungsformen kann das Messer ein Rund- oder ein Winkelmesser sein.

Ausführungsbeispiele der Erfindung werden nachstehend anhand der Zeichnung näher erläutert. Es zeigt:

Fig. 1 in perspektivischer Darstellung ein elektrisch beheiztes Schneidgerät,

Fig. 2 in vergrößerter Darstellung einen Schneidkopf mit Messeraufnahme, und

Fig. 3 und 4 verschiedene Ausführungsformen von Messern zur Verwendung in dem Gerät nach Fig. 1.

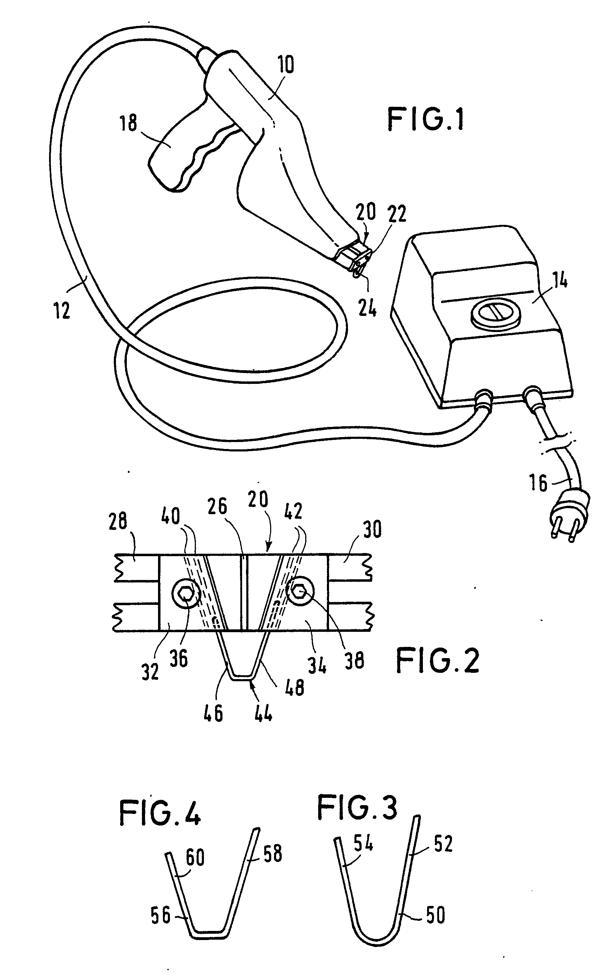

Das in Fig. 1 gezeigte elektrisch beheizte Schneidgerät besteht aus einer Vorrichtung 10, die über ein flexibles Verbindungskabel 12 mit einem Transformator 14 verbunden ist. Dem Transformator 14 kann über ein Anschlußkabel 16 elektrischer Strom zugeführt werden.

Die Vorrichtung 10 weist einen Handgriff 18 auf, mit welchem sie über das zu schneidende Werkstück geführt wird. Am freien Ende der Vorrichtung 10 ist ein Schneidkopf 20 angeordnet, an welchem über eine Messeraufnahme 22 ein beheizbares Schneidmesser 24 befestigt ist.

Fig. 2 zeigt eine Draufsicht auf den Schneidkopf 20 mit zwei über eine Isolierlage 26 voneinander getrennten Polanschlüssen 28 und 30. An dem Pol 28 ist eine Messeraufnahme 32 und an dem Pol 30 eine Messeraufnahme 34 über Schrauben 36 bzw. 38 befestigt. Die Messeraufnahmen 32 und 34 weisen Schlitze 40 bzw. 42 auf, in welche die Enden eines Schneidmessers 44 einsetzbar sind. Die Breitenerstreckung der Schlitze 40 bzw. 42 ist etwas geringer als die Breite der Klinge des Messers 44, so daß nach Anziehen der Schrauben 36 bzw. 38 das Messer 44 mit seinen Enden gegen die Pole 28 bzw. 30 gepreßt wird.

Das Messer 44 ist U- bzw. V-förmig ausgebildet mit zwei Schenkeln 46 und 38. Der Schenkel 48 ist länger als der Schenkel 46 ausgebildet, so daß bei der Befestigung des Messers 44 an dem Schneidkopf 20 zuerst das freie Ende des Schenkels 48 in einem Schlitz 42 aufgenommen wird. Dies kann erfolgen, ohne daß gleichzeitig der Schenkel 46 beobachtet werden muß. Nachdem der Schenkel 48 in dem Schlitz aufgenommen ist, kann ohne Rücksicht auf diesen Schenkel der Schenkel 46 in einen zugehörigen Schlitz 40 eingeführt werden. Nachdem dies erfolgt ist, wird das Messer 44 so weit mit seinen Schenkeln 46 und 48 in die Schlitze 40 bzw. 42 eingesteckt, bis die zu schneidende Tiefe eingestellt ist. Danach werden die Schrauben 36 und 38 angezogen, so daß über die mit den Schlitzen versehenen Messeraufnahmen 32 und 34 das Messer 44 gegen die Pole 28 bzw. 30 gepreßt und festgehalten wird.

Fig. 3 zeigt ein U-förmig ausgebildetes Messer 50 mit einem längeren Schenkel 52 und einem kürzeren Schenkel 54. Durch Auseinanderspreizen oder Zusammendrücken der Schenkel 52 und 54 kann eine Breitenanpassung an den Abstand der Schlitze in den Messeraufnahmen erfolgen.

Fig. 4 zeigt ein Winkelmesser 56 mit einem längeren Schenkel 58 und einem kürzeren Schenkel 60. Das zu den Messern 44 bzw. 50 gesagte trifft auch auf dieses Messer 56 zu.

## Ansprüche

1. Elektrisch beheiztes Schneidgerät zum Schneiden von Gummi und Kunststoffen, mit einem U- oder V-förmigen stromdurchflossenen Messer, dessen freie Schenkel mit den Polen einer Stromquelle verbunden sind, dadurch **gekennzeichnet,** daß der eine Schenkel (46, 54, 60) des Messers (44, 50, 56) kürzer ist als der andere Schenkel (48, 52, 58).

2. Schneidgerät nach Anspruch 1, dadurch **gekennzeichnet,** daß der Längenunterschied der Schenkel (46, 48; 52, 54; 58, 60) ca. 3 mm beträgt.

3. Schneidgerät nach Anspruch 2, dadurch **gekennzeichnet,** daß das Messer ein Rundmesser (50) oder ein Winkelmesser (56) ist.

EP 0 317 751 A2

FIG.1

FIG.2

FIG.4

FIG.3